# EUROPÄISCHE PATENTANMELDUNG

(11) **EP 0 577 117 A2**
(43) Veröffentlichungstag der Anmeldung: **05.01.1994**
(21) Anmeldenummer: 93110487.1
(22) Anmeldetag: 01.07.1993
(51) Int. Cl.: B01D 53/36, F01N 3/28, B01J 35/06, B01J 37/00

(54) **Verfahren zum Herstellen eines Katalysators**

(30) Priorität: 02.07.1992 DE 4221763
(71) Anmelder: Schwäbische Hüttenwerke Gesellschaft mit beschränkter Haftung, D-73414 Aalen (DE)
(72) Erfinder: Härle, Hans A., D-73441 Bopfingen (DE)
(74) Vertreter: Lorenz, Werner, Dipl.-Ing.

(57) **Zusammenfassung**

Bei einem Verfahren zum Herstellen eines Katalysators zur Beseitigung von schädlichen Bestandteilen aus dem Abgas eines Verbrennungsmotores oder aus Verbrennungsanlagen für fossile Brennstoffe, wie z.B. Öl, aus einem Geflecht, Gewebe, Gestrick oder Gewirr von Fasern, Blechstreifen, Spänen, Drähten (1), Pulver oder Mischungen daraus, aus Metall, Kunststoff, Keramik, Kohlenstoffasern oder Mischungen daraus, wird der Katalysatorkörper aus einer Vielzahl von übereinander gelegten einzelnen Lagen (2) des Geflechtes, Gewebes, Gestrickes oder Gewirres gebildet. Die einzelnen Lagen (2) werden durch Sintern, Verschweißen oder durch mechanische Befestigungsglieder miteinander verbunden.

## Beschreibung

Die Erfindung betrifft ein Verfahren zum Herstellen eines Katalysators zur Beseitigung von schädlichen Bestandteilen aus dem Abgas eines Verbrennungsmotores oder aus Verbrennungsanlagen für fossile Brennstoffe, wie z.B. Öl.

Aus der DE-OS 37 43 503 ist es bereits bekannt, einen Katalysatorkörper aus einem Gewebe, Gestrick oder Gewirr aus Metallfasern, Metallspänen, Metalldrähten oder Metallpulvern oder einer Mischung daraus vorzusehen, der in der Abgasleitung bzw. im Auspuffsystem eines Verbrennungsmotores angeordnet ist. Dabei ist der Katalysatorkörper aus mehreren Lagen gebildet, die durch einen Sintervorgang miteinander verbunden werden.

Neben Metallen als Werkstoff sind auch keramische Materialien für einen Katalysatorkörper bereits bekannt.

Der vorliegenden Erfindung liegt die Aufgabe zugrunde, ein Verfahren zum Herstellen eines Katalysators zur Beseitigung von schädlichen Bestandteilen aus dem Abgas eines Verbrennungsmotores oder aus Verbrennungsanlagen für fossile Brennstoffe, wie z.B. Öl, zu schaffen, der einen hohen Wirkungsgrad besitzt und der sehr universell in Abhängigkeit von den jeweiligen Einsatzbedingungen einsetzbar ist.

Erfindungsgemäß wird diese Aufgabe durch ein Verfahren mit einem Geflecht, Gewebe, Gestrick oder Gewirr von Fasern, Blechstreifen, Spänen, Drähten, Pulver oder Mischungen daraus aus Metall, Kunststoff, Keramik, Kunststoffasern oder Mischungen daraus gelöst, wobei der Katalysatorkörper aus einer Vielzahl von übereinander gelegten einzelnen Lagen des Geflechtes, Gewebes, Gestrickes oder Gewirres von gleicher oder unterschiedlicher Zusammensetzung gebildet wird, und wobei die einzelnen Lagen durch Sintern, Verschweißen oder durch mechanische Befestigungsglieder miteinander verbunden werden.

Mit dem erfindungsgemäßen Verfahren sind eine Vielzahl von Kombinationsmöglichkeiten für eine individuelle Herstellung eines Katalysators derart geschaffen, daß dieser stets optimal auf den jeweiligen Einsatzfall abgestimmt werden kann.

Zwar sind sowohl einzelne Strukturen bezüglich des Aufbaues eines Katalysatorkörpers bereits bekannt und auch einzelne Materialien, aber mit der erfindungsgemäßen Kombination wird ein neuer Katalysator geschaffen, der einen hohen Wirkungsgrad besitzt, welcher in dieser erfindungsgemäßen Kombination nicht nahegelegen hat.

Erste Variationsmöglichkeiten bezüglich eines optimalen Einsatzes des Katalysators ergeben sich z.B., wenn in einer erfindungsgemäßen Ausgestaltung vorgesehen wird, daß die Drähte oder Fasern in einer Lage in eine Wellenform gebracht werden.

Durch die Wellenform jeder Lage wird nicht nur eine hohe Stabilität erzielt, insbesondere, wenn Fasern oder Drähte in Form eines Gewebes senkrecht zueinander liegen und sich regelmäßig überkreuzen, sondern die Durchflußeigenschaften des Abgases lassen sich durch diese Ausgestaltung gezielt vorwählen.

So kann z.B. vorgesehen sein, daß benachbart zueinanderliegende Lagen in Wellenform gegensinnig derart angeordnet werden, daß jeweils ein Wellental unter einem Wellenberg liegt und umgekehrt.

Durch diese Ausgestaltung werden zwischen den einzelnen Schichten und und Lagen Freiräume dergestalt geschaffen, daß sich das Abgas auch seitlich bzw. quer zur Durchströmrichtung verteilen können. Auf diese Weise kommt es zu einer Verwirbelung und damit zu einer besseren Kontaktierung der Drähte und Fasern und damit zu einer sehr guten Katalysatorwirkung. Auf diese Weise kann man gegebenenfalls auch verschiedene Abgase mischen.

Umgekehrt kann es in anderen Fällen von Vorteil sein, wenn ein dichterer Aufbau geschaffen wird, der erfindungsgemäß dadurch erreicht wird, daß benachbart zueinander liegende Lagen gleichsinnig zueinander angeordnet werden, derart, daß jeweils Wellentäler und Wellenberge übereinander liegen.

Ein derartiger Filterkorper besitzt im Vergleich zu der vorstehend genannten Ausgestaltung eine höhere Dichte und damit einen höheren Durchflußwiderstand, wodurch entsprechend die Strömungsgeschwindigkeit des Abgases durch diesen Filterkörperabschnitt reduziert wird. Daraus resultiert ebenfalls eine entsprechend längere Verweilzeit und damit eine bessere Umwandlung von schädlichen Bestandteilen im Abgas.

Selbstverständlich lassen sich innerhalb eines Katalysatorkörpers die beiden vorstehend genannten Maßnahmen auch kombinieren, womit Abschnitte unterschiedlicher Dichte und damit unterschiedlichen Durchflußwiderstandes erzeugt werden.

Eine weitere Maßnahme zur Erhöhung der Kontaktflächen und der Verweilzeit des den Katalysatorkörpers durchströmenden Abgases kann darin bestehen, daß die einzelnen Lagen senkrecht zur Fließrichtung des Abgases derart verschoben werden, daß in Durchflußrichtung hintereinander liegende Drähte, Fasern oder Späne versetzt zueinander liegen.

Dadurch, daß das Abgas während seiner Durchströmung auf die versetzt liegenden Drähte oder Fasern prallt, wird zum einen eine gute Kontaktierung erreicht und zum andern eine Verwirbelung und entsprechende Ablenkungen, durch die die Katalysatorwirkung ebenfalls erhöht wird.

Eine weitere Möglichkeit zur Verbesserung der Katalysatorwirkung kann darin bestehen, daß übereinander liegende Lagen derart zueinander verdreht werden, daß sich spiralförmige Durchströmkanäle für das Abgas bilden.

Durch die gewählte Verdrehung wird dem Abgas während seiner Durchströmung durch den Katalysatorkörper eine Spiral- oder Wendelform aufgezwungen, was ebenfalls in einer verbesserten Katalysatorwirkung resultiert.

Die einzelnen Lagen des Katalysatorkörpers können in bekannter Weise durch einen Sintervorgang oder durch Verschweißen miteinander verbunden werden. Ebenso sind mechanische Verbindungsglieder in Form von seitlichen Klammern möglich.

Eine sehr vorteilhafte Verbindungsart ergibt sich, wenn in einer Ausgestaltung der Erfindung vorgesehen ist, daß die übereinander gelegten Lagen durch in Durchströmrichtung des Abgases verlaufende Drähte oder Stäbe miteinander verbunden werden, die durch die Maschen, Öffnungen, Bohrungen, Freistellen oder dergleichen in den Lagen geschoben werden.

Durch die Anordnung von Drähten oder Stäben, die selbstverständlich entsprechend stabil auszubilden sind, wird eine einfache Verbindungsart zwischen den einzelnen Lagen geschaffen.

Eines der Vorteile dieser Verbindungsart liegt darin, daß man z.B. auf einfache Weise zwischen den einzelnen Lagen Abstände schaffen kann, durch die eine Beruhigung bzw. eine erneute Vermischung des Abgasstromes erreicht wird. Hierzu ist es nämlich lediglich erforderlich, daß man die einzelnen Lagen nicht dicht zusammenpreßt, sondern entsprechende Freiräume bzw. Abstände zwischen den Lagen beläßt, wobei dies auch paketweise derart erfolgen kann, daß z.B. mehrere Lagen dicht aneinander liegen, woran sich ein Zwischenraum anschließt. Anschließend erfolgt wieder ein Paket aus dicht zusammengeschobenen Lagen. Dabei können die einzelnen Pakete auch sowohl hinsichtlich Aufbau und Materialien auch hinsichtlich ihres Durchflußwiderstandes unterschiedlich ausgestaltet werden. Dies bedeutet, daß man mit dem erfindungsgemäßen Verfahren eine hohe Variationsbreite erhält.

Die Verbindung der einzelnen Lagen mit den sich durch diese erstreckenden Drähte oder Stäbe kann z.B. durch Punktverschweißungen oder durch eine Klemmwirkung erfolgen.

Eine Klemmwirkung läßt sich auf einfache Weise dadurch erreichen, daß man entsprechend die einzuschiebenden Drähte oder Stäbe so dimensioniert, daß sie gegenüber den Maschen, Öffnungen, Bohrungen oder Freistellen ein entsprechendes Übermaß besitzen.

Eine sehr vorteilhafte und nicht naheliegende Alternativlösung zu der Übereinanderanordnung von mehreren Lagen zur Bildung eines Katalysatorkörpers kann darin bestehen, daß der Katalysatorkörper aus einem vorgefertigten Band hergestellt wird, das spiralförmig gewickelt wird.

Die Wicklung eines Katalysatorkörpers aus einem entsprechend langem Band in Spiralform stellt eine sehr einfache Herstellungsart für einen Katalysator dar. Entsprechend der Wicklungszahl lassen sich auf diese Weise mit einem Grundmaterial Katalysatorkörper von unterschiedlichen Durchmessern und damit unterschiedlicher Leistung herstellen.

Zur Erhöhung der Kontaktierung des Abgases und damit Erhöhung der Katalysatorwirkung ist es dabei von Vorteil, wenn vorgesehen wird, daß wenigstens die in Längsrichtung des Bandes verlaufenden Drähte oder Fasern in Wellenform angeordnet werden.

Eine weitere Verbesserung der Katalysatorwirkung durch eine Erhöhung der Katalysatoroberfläche wird erreicht, wenn in einer erfindungsgemäßen Weiterbildung vorgesehen wird, daß das Geflecht, Gewebe, Gestrick oder Gewirr mit Pulver, Spänen oder Körner aus Metall, Metalloxyden, Keramik, Kunststoff, Kohlenstoffasern oder einer Mischung daraus dotiert wird.

Die Auswahl der verschiedenen Materialien, die im allgemeinen ebenfalls eine katalytische Wirkung besitzen sollten, richtet sich nach dem jeweiligen Anwendungsfall. Auch hier ist es möglich, innerhalb eines Katalysatorkörpers unterschiedliche Materialien oder Mischungen daraus zu verwenden.

Die Aufbringung des Dotierungsmateriales kann auf vielfältige Weise, wie z.B. durch ein Aufsintern erfolgen oder in nicht naheliegender Weise durch ein Flammspritzen. Hierzu werden in den Flammstrahl eines Schweißbrenners entsprechend die gewunschten Materialien in Pulverform eingebracht und entsprechend verflüssigt durch den Schweißvorgang auf das Gewebe, Geflecht, Gestrick oder Gewirr aufgebracht.

Eine andere Möglichkeit, Dotierungsmaterial aufzubringen, kann darin bestehen, daß Metallpulver in einem Oxidationsverfahren aufoxidiert wird.

In vorteilhafter Weise verwendet man hierfür Chrom, Molybdän oder Vanadium bzw. Mischungen daraus. Selbstverständlich sind jedoch im Bedarfsfalle auch andere Materialien möglich.

Diese Materialien werden in einem Ofen in bekannter Weise oxydiert. Der Vorteil dieser Oxydation liegt darin, daß sie eine bessere katalytische Wirkung besitzen und darüber hinaus billiger sind als z.B. Platin als Katalysator. Darüber hinaus sind diese Stoffe recyclungsfähig.

In der Praxis haben sich vorteilhafte Mischungen von ¹/₃ Chrom, ¹/₃ Molybdän und ¹/₃ Vanadium herausgestellt.

In einer weiteren vorteilhaften Ausgestaltung der Erfindung kann vorgesehen sein, daß senkrecht zueinander liegende Drähte oder Fasern einer Lage unterschiedliche Durchmesser besitzen, und zwar derart, daß die Drähte oder Fasern in einer Richtung einen wesentlich größeren Durchmesser besitzen als die Drähte oder Fasern in der anderen Richtung.

Durch die Wahl von Drähten unterschiedlichen Durchmessern lassen sich z.B. Querdiffusionen und Querströmungen erreichen, die durch entsprechend größere Abstände im Bereich der Drähte oder Fasern mit den größeren Durchmessern entstehen.

Als vorteilhafte Werte in der Praxis bezüglich der Durchmesserunterschiede haben sich Unterschiede von zweifach bis dreifach herausgestellt. Dabei können die Drähte, Fasern oder Blechstreifen mit den kleineren Durchmessern in einem Bereich von ca. 0,01 bis 1 mm und die Drähte oder Fasern mit den größeren Durchmessern in einem Bereich bis zu 3 mm liegen.

Nachfolgend sind verschiedene Ausführungsbeispiele der Erfindung anhand der Zeichnung prinzipmäßig beschrieben.

Es zeigt:
- Fig. 1: eine erfindungsgemäße Lage eines Katalysatorkörpers in Wellenform;
- Fig. 2: eine erfindungsgemäße Lage eines Katalysatorkörpers ebenfalls in einer Wellenform, allerdings anderer Zusammenstellung;
- Fig. 3 und 4: einen Katalysatorkörper in Wickeltechnik;
- Fig. 5: eine Lage eines Katalysatorkörpers mit Drähten unterschiedlichen Durchmessers;
- Fig. 6: mehrere Lagen eines Katalysatorkörpers, die zueinander verschoben sind;
- Fig. 7: eine Ansicht eines Katalysatorkörpers mit mehreren Lagen, die zueinander verdreht sind;
- Fig. 8: die Verbindung von einzelnen Lagen eines Katalysatorkörpers mit Stäben in Seitenansicht;
- Fig. 9: eine Ansicht auf die Verbindungsart nach Fig. 8.

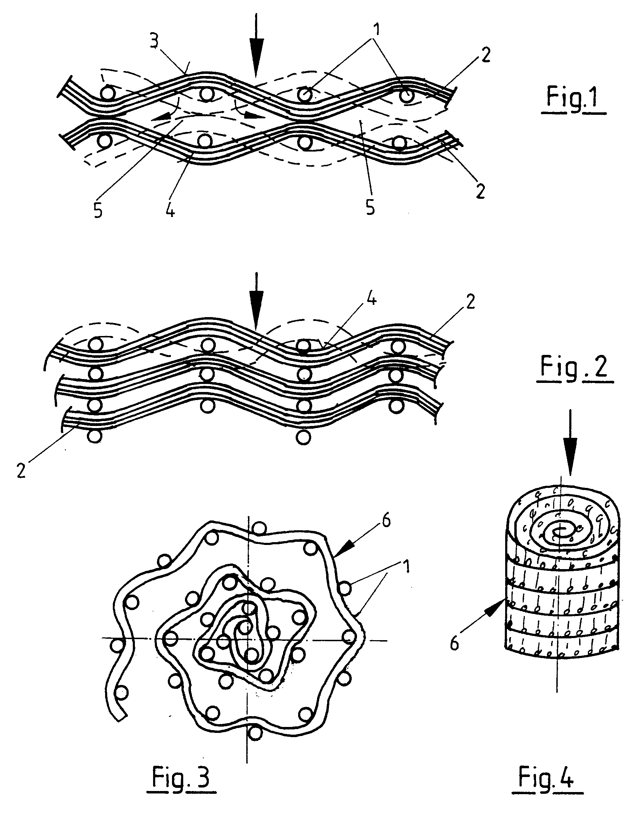

Wie aus der Fig. 1 ersichtlich ist, sind in Form eines Gewebes senkrecht zueinander liegende Drähte 1 in Wellenform gebogen. Jede einzelne Lage 2, die aus einer Vielzahl von Längs- und Querdrähten besteht, die entsprechend miteinander "verwebt" sind, werden vor ihrer Verbindung zu einem gemeinsamen Katalysatorkörper derart übereinander gelegt, daß jeweils ein Wellenberg 3 einer Lage über einem Wellental 4 der benachbart liegenden Lage zu liegen kommt. Auf diese Weise entstehen zwischen den Drähten 1 regelmäßig entsprechend vergrößerte Freiräume 5, in denen das in Pfeilrichtung durchströmende Abgas seitlich strömen kann. Auf diese Weise kommt es zu einer starken Berührung zwischen dem Abgas und den katalytisch beschichteten Oberflächen der Drähte 1. Darüber hinaus ist es auf diese Weise auch möglich, im Bedarfsfalle verschiedene Gasströme zusammenzuführen, die in den Zwischenräumen 5 entsprechend gemischt werden.

Die Drähte, Fasern, Späne 1 oder das Pulver bestehen aus einem katalytischen Werkstoff oder sind zumindest mit einem katalytisch wirkenden Werkstoff beschichtet, um die gewünschte Katalysatorwirkung zu erreichen.

In der Fig. 2 ist eine andere Zusammenstellungsart von in Wellenform gebrachten Drähten dargestellt. Wie ersichtlich, sind dabei die einzelnen Lagen derart gleichsinnig angeordnet, daß jeweils Wellenberge 3 und Wellentäler 4 direkt übereinander liegen.

In den Fig. 3 und 4 ist eine einfache Herstellungsart für einen Katalysatorkörper dargestellt. Wie ersichtlich, wird dieser aus einem Band 6 hergestellt, das aus einer Vielzahl von senkrecht zueinander angeordneten Drähten, Fasern oder aus einem Gestrick oder Gewirr von Metallfasern oder Drähten von innen nach außen spiralförmig gewickelt ist. Der daraus gebildete Katalysatorkörper wird gemäß Fig. 4 in Pfeilrichtung durchströmt.

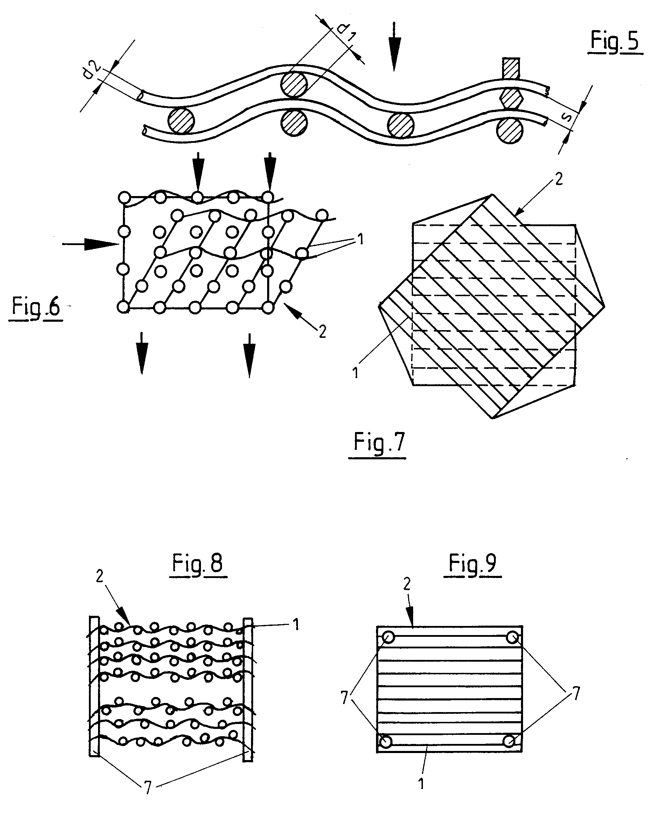

In der Fig. 5 ist in Prinzipdarstellung eine Ausgestaltung eines Abschnittes eines Katalysatorkörpers dargestellt, bei dem Drähte bzw. Fasern von deutlich unterschiedlichen Durchmessern verwendet werden.

Wie ersichtlich, sind dabei die Durchmesser d₁ wesentlich größer als die Durchmesser d₂ von benachbart und senkrecht dazu liegenden Drähten. Auf diese Weise ergibt sich ein vergrößerter Abstand s zwischen den einzelnen Drahtlagen.

Aus dieser Fig. 5 ist auch ersichtlich, daß man zur Herstellung eines Katalysatorkörpers auch Drähte mit verschiedenen Formen verwenden kann, wie z.B. Drähte mit einem runden, ovalen, eckigen, quadratischen, sechseckigen Querschnitt und dergleichen.

In der Fig. 6 ist ein Katalysatorkörper dargestellt, bei dem mehrere übereinander gesetzte einzelne Lagen durch einen seitlichen Druck (siehe Pfeil), der auf nicht näher dargestellte Weise erzeugt wird, gegen die Durchflußrichtung seitlich verschoben werden. Dies kann vor oder während der Verbindung der einzelnen Lagen miteinander erfolgen, d.h. in einem Zustand wo sie noch genügend elastisch bzw. gegeneinander verschiebbar sind. Im Endzustand liegt dann eine seitlich verschobene Form des Katalysatorkörpers derart vor, daß benachbart zueinander bzw. übereinander liegende Drahtlagen derart versetzt sind, daß jeweils in einen Zwischenraum ein Draht zu liegen kommt. Auf diese Weise ergibt sich eine entsprechende Verwirbelung und Ablenkung des durchströmenden Abgases.

Um den auf diese Weise verschobenen Katalysatorkörper wieder in eine zylindrische oder eckige Form mit parallel zur Durchflußrichtung des Abgases verlaufenden Außenwänden zu bringen, kann der Katalysatorkörper gegebenenfalls seitlich derart abgeschnitten werden, daß die durch die Verschiebung überstehenden Teile abgetrennt werden.

Eine ähnliche Erhöhung der Kontaktfläche und eine entsprechende Verwirbelung des durchströmenden Abgases ergibt sich entsprechend der Ausgestaltung nach der Fig. 7. Wie daraus ersichtlich ist, werden die übereinander angeordneten Lagen vor oder während dessen Verbindung um die in Durchströmungsrichtung verlaufende Längsachse verdreht. Auf diese Weise wird das Abgas gezwungen in Spiral- bzw. Wendelform durch den Katalysatorkörper zu strömen.

Aus dieser Fig. 7 ist auch ersichtlich, daß die einzelnen Lagen eine Quadratform in der Draufsicht besitzen können. Selbstverständlich ist dies jedoch nur beispielsweise genannt, im Bedarfsfalle kann auch eine Kreisform oder jede andere Form gewählt werden.

In den Fig. 8 und 9 ist eine Verbindungsart der einzelnen Lagen 2 über Stäbe 7 dargestellt, die in Durchflußrichtung durch die Maschen der einzelnen Lagen hindurchgeschoben sind. Die Stäbe 7 können dabei in einfacher Weise und nicht störend im Bereich der Eckpunkte durchgeschoben werden. Sie besitzen Durchmesser, die derart groß sind, daß die Stäbe ein Übermaß gegenüber den Maschen, Bohrungen, Freiräumen oder dergleichen besitzen, so daß diese entsprechend aufgeweitet werden müssen. Dadurch sind die einzelnen Lagen unter Klemmwirkung an den Stäben 7 befestigt. Dies bedeutet wiederum, daß man die einzelnen Lagen nicht nur paketweise zusammenschieben kann, sondern im Bedarfsfalle auch frei und einzeln innerhalb des dadurch gebildeten Katalysatorkörpers an den Stäben 7 befestigen kann. In der Fig. 8 ist im mittleren Bereich eine Lage 2 dargestellt, die auf Abstand von den darüber liegenden und den darunter liegenden Lagen angeordnet ist. Auf diese Weise werden Beruhigungszonen für das Abgas gebildet.

## Patentansprüche

1. Verfahren zum Herstellen eines Katalysators zur Beseitigung von schädlichen Bestandteilen aus dem Abgas eines Verbrennungsmotores oder aus Verbrennungsanlagen für fossile Brennstoffe aus einem Geflecht, Gewebe, Gestrick oder Gewirr von Fasern, Blechstreifen, Spänen, Drähten, Pulver oder Mischungen daraus, aus Metall, Kunststoff, Keramik, Kohlenstoffasern oder Mischungen daraus, wobei der Katalysatorkörper aus einer Vielzahl von übereinander gelegten einzelnen Lagen (2) des Geflechtes, Gewebes, Gestrickes oder Gewirres von gleicher oder unterschiedlicher Zusammensetzung gebildet wird, und wobei die einzelnen Lagen (2) durch Sintern, Verschweißen oder durch mechanische Befestigungsglieder miteinander verbunden werden.

2. Verfahren nach Anspruch 1,
**dadurch gekennzeichnet,** daß die Drähte oder Fasern (1) in einer Lage (2) in eine Wellenform gebracht werden.

3. Verfahren nach Anspruch 2,
**dadurch gekennzeichnet,** daß benachbart zueinander liegende Lagen (2) in Wellenform gegensinnig derart angeordnet werden, daß jeweils ein Wellental (4) unter einem Wellenberg (3) liegt und umgekehrt.

4. Verfahren nach Anspruch 2,
**dadurch gekennzeichnet,** daß benachbart zueinander liegende Lagen (2) gleichsinnig zueinander angeordnet werden, derart, daß jeweils Wellentäler (4) und Wellenberge (3) übereinander liegen.

5. Verfahren nach einem der Ansprüche 1 bis 4,
**dadurch gekennzeichnet,** daß die einzelnen Lagen (2) senkrecht zur Fließrichtung des Abgases derart verschoben werden, daß in Durchflußrichtung hintereinander liegende Drähte, Fasern oder Späne versetzt zueinander liegen.

6. Verfahren nach einem der Ansprüche 1 bis 4,
**dadurch gekennzeichnet,** daß übereinander liegende Lagen (2) derart zueinander verdreht werden, daß sich spiralförmige Durchströmkanäle für das Abgas bilden.

7. Verfahren nach einem der Ansprüche 1 bis 6,
**dadurch gekennzeichnet,** daß die übereinander gelegten Lagen (2) durch in Durchströmrichtung des Abgases verlaufende Drähte oder Stäbe (1) miteinander verbunden werden, die durch die Maschen, Öffnungen, Bohrungen, Freistellen oder dergleichen in den Lagen (2) geschoben werden.

8. Verfahren nach Anspruch 7,
**dadurch gekennzeichnet,** daß die einzelnen Lagen (2) durch Schweißen mit den Drähten oder Stäben (1) verbunden werden.

9. Verfahren nach Anspruch 7,
**dadurch gekennzeichnet,** daß die einzelnen Lagen (2) durch Klemmwirkung mit den Drähten oder Stäben (7) verbunden werden.

10. Verfahren zur Herstellung eines Katalysators zur Beseitigung von schädlichen Bestandteilen aus dem Abgas eines Verbrennungmotores oder aus Verbrennungsanlagen für fossile Brennstoffe aus einem Geflecht, Gewebe, Gestrick oder Gewirr von Fasern, Blechstreifen, Spänen, Drähten, Pulver oder Mischungen daraus, aus Metall, Kunststoff, Keramik, Kohlenstoff, Kunststoffasern oder Mischungen daraus, wobei der Katalysatorkörper aus einem vorgefertigten Band (6) hergestellt wird, das spiralförmig gewickelt wird.

11. Verfahren nach Anspruch 10,
**dadurch gekennzeichnet,** daß wenigstens die in Längsrichtung des Bandes (6) verlaufenden Drähte oder Fasern (1) in Wellenform angeordnet werden.

12. Verfahren nach einem der Ansprüche 1 bis 11,
**dadurch gekennzeichnet,** daß das Geflecht, Gewebe, Gestrick oder Gewirr mit Pulver, Spänen oder Körner aus Metall, Metalloxyden, Keramik, Kunststoff, Kohlenstoffasern oder einer Mischung daraus dotiert wird.

13. Verfahren nach Anspruch 12,
**dadurch gekennzeichnet,** daß das Dotierungsmaterial durch Flammspritzen aufgebracht wird.

14. Verfahren nach Anspruch 13,
**dadurch gekennzeichnet,** daß Metallpulver in einem Oxidationsverfahren aufoxidiert wird.

15. Verfahren nach Anspruch 14,
**dadurch gekennzeichnet,** daß das Metallpulver aus einer Mischung von Chrom, Molybdän, Platin, Rhodin, Palladium und Vanadium besteht.

16. Verfahren nach einem der Ansprüche 1 bis 15,
**dadurch gekennzeichnet,** daß senkrecht zueinander liegende Drähte, Fasern oder Blechstreifen (1) einer Lage (2) unterschiedliche Durchmesser besitzen, und zwar derart, daß die Drähte, Fasern oder Blechstreifen in einer Richtung einen wesentlich größeren Durchmesser besitzen als die Drähte oder Fasern in der anderen Richtung.

17. Verfahren nach Anspruch 16,
**dadurch gekennzeichnet,** daß die Drähte, Fasern oder Blechstreifen einer Reihe den zwei- bis dreifachen Durchmesser der Drähte oder Fasern der anderen Reihe aufweisen.

18. Verfahren nach Anspruch 16 oder 17,
**dadurch gekennzeichnet,** daß die Drähte, Fasern oder Blechstreifen einer Reihe einen Durchmesser von 0,01 bis 1 mm und die Drähte oder Fasern der anderen Reihe einen Durchmesser bis ca. 3 mm aufweisen.
